# EUROPEAN PATENT APPLICATION

(11) **EP 1 806 059 A2**
(43) Date of publication of application: **11.07.2007**
(21) Application number: 06026524.6
(22) Date of filing: 21.12.2006
(51) Int. Cl.: A23L 1/236

(54) **Improving aspartame stability in edible compositions**

(30) Priority: 07.01.2006 EP 06000261
(71) Applicant: Nutrinova Nutrition Specialties & Food Ingredients GmbH, 61476 Kornberg im Taunus (DE)
(72) Inventor: Rathjen, Susanne, Dr., 64287 Darmstadt (DE); Sälzer, Katrin, 63538 Grosskrotzenburg (DE); Schwarz, Susanne, 60318 Frankfurt (DE)

(57) **Abstract**

The invention relates to a composition comprising
- as component I: Isomaltulose and
- as component II: Aspartame or a blend of high intensity sweeteners comprising aspartame and one or more high intensity sweetener other than aspartame.

## Description

The present invention relates to stabilized high intensity sweetener (HIS) mixtures comprising aspartame; specifically to mixtures which contain isomaltulose as a stabilizing agent and aspartame or a blend of high intensity sweeteners comprising aspartame and one or more high intensity sweeteners other than aspartame, such as acesulfame K, aucralose, saccharin, cyclamate, neotame, thaumatine, stevioside, aspartame-acesulfame-salt, etc.

### Background of the invention

Aspartame is a well known HIS and is widely used to sweeten foods, foodstuffs and edible compositions. It is also well known that aspartame decomposes in aqueous solution to provide a range of by-products which, although safe, are not sweet. The loss of sweetness that goes along with aspartame's degradation has been a source of concern for food technologists because it can limit the shelf life of consumer products.

It has further been detected that dry compositions of aspartame and carbohydrate bulk sweeteners such as dextrose, after a prolonged storage time start to discolor from white to yellow/brown with a detectable decomposition of aspartame.

The ongoing debate on obesity in developed countries and the growing health consciousness of consumers lead to an increasing demand of food products and edible compositions which fulfill the demand for sugar free or at least calorie reduced sweetening products. On one hand these products shall serve the consumer's request for good tasting products, and on the other hand fulfill the producer's requests for stable products which maintain the product quality even beyond the expected shelf life.

### Prior Art

Various publications deal with the decomposition of aspartame under certain conditions.

Aspartame (N-L-α-aspartyl-L-phenylalanine-1-methyl ester) is composed of two amino acids: phenylalanine and aspartic acid. This implicates that under certain conditions the molecule may undergo degradation. At pH 4.0 to 4.4, aspartame exhibits its best stability (Vetsch W., 'Aspartame' in LFRA Ingredients Handbook, Sweeteners 2nd Edition, 2000, England). In aqueous solution with pH conditions below 4.0 and above 4.4 the degradation accelerates. The decomposition is primarily a hydrolysis into aspartic acid and phenylalanine with methanol and (2S-cis)-(-)-5-benzyl-3,6-dioxo-2-piperazineacetic acid forming as the by-products. When decomposed into the two amino acids, aspartame loses its function as a sweetening agent (Frei G., Nutrasweet® and heat processing - product opportunities, pages 155-160 and Helferich W., Winter C.K., in Chapter 'Food Additives': Food Technology, CRC Press, 2001, pages 187-202 and Vetsch W., *'Aspartame',* ibid).

Not only pH but also temperature and the presence of buffer salts have an effect on the stability of aspartame. Additionally, other food components such as carbohydrates, some flavor components and ascorbic acid can react with aspartame. This results in Maillard type reactions which yield brown, discolored products (Loftsson T. and Baldvinsdóttir J., 'The stability of Aspartame in aqueous solutions', Acta Pharm. Nord 4 (4) 329-330, 1992). Chemically reducing carbohydrates such as sucrose, fructose, maltose, lactose, or dextrose, are known as being chemically active and tend to undergo Maillard reactions (Belitz, Grosch, Lehrbuch der Lebensmittelchemie, 4th edition, Springer Lehrbuch Verlag, 1992, p. 245 ff.).

Like sucrose and fructose, isomaltulose is a chemically reducing disaccharide which has just been granted approval for use in the European Union for all foods according to the commission's decision of July 25^{th}, 2004. In the USA, isomaltulose (tradename: Palatinose®) has GRAS status. It also tends to undergo Maillard like reactions (Palatinit GmbH, Product information brochure: 'A New Carbohydrate from palatinit- Providing the Better Energy', FIE, Paris, November 2005).

The degradation of aspartame is still a problem and yet no real solution has been proposed to the problem of instability of aspartame in edible compositions.

It was an object of the present invention to improve the stability of aspartame in foods, food products and edible compositions. It was another object of the present invention to provide an aspartame containing composition which shows an improved aspartame stability under varying pH, temperature and buffer conditions (as compared to known aspartame containing compositions). It was another object of the present invention to provide a method of reducing the discoloration of an aspartame containing composition.

### Brief description of the invention

The present invention provides a composition wherein the stability of aspartame is improved.

The present invention relates to a mixture comprising
- isomaltulose, and
- aspartame, or
   a blend of high intensity sweeteners comprising aspartame and one or more high intensity sweeteners other than aspartame.

### Detailed description of the invention

The aspartame stabilizing agent according to the invention is isomaltulose. Isomaltulose is a disaccharide which may be obtained by bio-degradation of saccharose, e.g. with *protaminobacter rubrum.* It is commercially available under the trademark Palatinose® (Palatinit GmbH, Mannheim, Germany).

The second component of the mixture according to the present invention is aspartame or a blend (mixture) of aspartame with one or more high intensity sweeteners other than aspartame. Such other high intensity sweeteners are well known in the art and may comprise e.g. acesulfame K, aspartame-acesulfame-salt, sucralose, saccharin, cyclamate, neotame, thaumatine or stevioside. The following components are preferred second components in the composition according to the invention: acesulfame K, saccharin, cyclamate, sucralose, and mixtures thereof.

The weight ratio of isomaltulose to aspartame or the blend of high intensity sweeteners comprising aspartame and one or more high intensity sweetener other than aspartame in the composition according to the invention is 5:1 to 50,000:1, preferably 20:1 to 20,000:1.

If a blend of high intensity sweeteners is used in the composition according to the invention the weight ratio of aspartame to one or more high intensity sweeteners other than aspartame is generally known to those skilled in the art.

The compositions according to the invention may be prepared by any conventional mixing method, e.g. by simply mixing isomaltulose and aspartame and optionally other high intensity sweeteners such as acesulfame K, sucralose, saccharin, cyclamate, neotame, thaumatine, stevioside, etc. The mixing process employed may be any suitable mixing technique known in the food industry. The mixing may be carried out with dry products or with solutions of said products, or combinations thereof. The calorie-reduced sweetener compositions may then be incorporated directly into foods, foodstuffs or edible compositions, using techniques known in the art. Likewise, the components of this mixture may be separately added to the food, foodstuff or edible composition.

Food, foodstuff and edible compositions according to the invention are table top sweetener products, hypotonic beverages, soft drinks, sports drinks, hypertonic beverages, energy drinks, isotonic beverages, confectioneries, dairy products, pudding mixes; desserts, cake mixes, cereals, cereal bars, baked goods, chewing gums, syrups or dilutables, pharmaceuticals, delicacies such as soups, sauces or dressings either as ready to eat or as instant product.

Surprisingly it has been found that the degradation of aspartame over a longer storage period or during heat treatment can be reduced to a very low level when the composition contains isomaltulose. The stability of the composition according to the invention is compared to mixtures of aspartame with other commonly used carbohydrates, such as sucrose, glucose, glucose syrup, fructose, fructose syrup, invert sugar, or high fructose corn syrup, and mixtures thereof. At 90 °C, in a typical composition of the present invention 5 % less aspartame degrade than in compositions containing no isomaltulose; also, at 90 °C, in a composition containing aspartame, acesulfame K, cyclamate, and isomaltulose 5 % less aspartame degrade than in a comparable composition where isomaltulose is replaced by saccharose.

Surprisingly it was also found that the discoloration (i.e. browning) of compositions containing aspartame over time can effectively be suppressed by the addition of isomaltulose. This is even more surprising as isomaltulose is known to be a chemically reducing sugar known to facilitate the discoloring (browning) reaction of amino acids and peptides.

### The invention will be illustrated by the following examples:

### Examples

### 1.1 Dry compositions, regular storage

Half of the given amount of dextrose and isomaltulose, respectively was pre-mixed with a high intensity sweetener, including aspartame (APM) and acesulfame K (ACK) using a Multimix MX 32 blender (Braun GmbH, Germany) for a few seconds at level three, the other half of dextrose or isomaltulose was added and the resulting composition mixed for another minute. Samples were stored at +40 °C and 75% relative humidity (rH) (adjusted with the aid of saline solution) over a period of several weeks. In the beginning and then every other week samples were taken and APM content determined via HPLC analysis and judged via optical measurement.

**Composition**

| | Example 1.1.1 (g/100 g powder) | Example 1.1.2 (g/100 g powder) |
|---|---|---|
| Isomaltulose | 0 | 96.6 |
| Dextrose | 96.6 | 0 |
| Aspartame | 3 | 3 |
| Acesulfame K | 0.4 | 0.4 |

Surprisingly, the ACK/APM/isomaltulose mixture did not show any browning and no aspartame degradation, while the mixture of ACK/APM and dextrose was browned and exhibited a loss of nearly 40 wt.-% of aspartame.

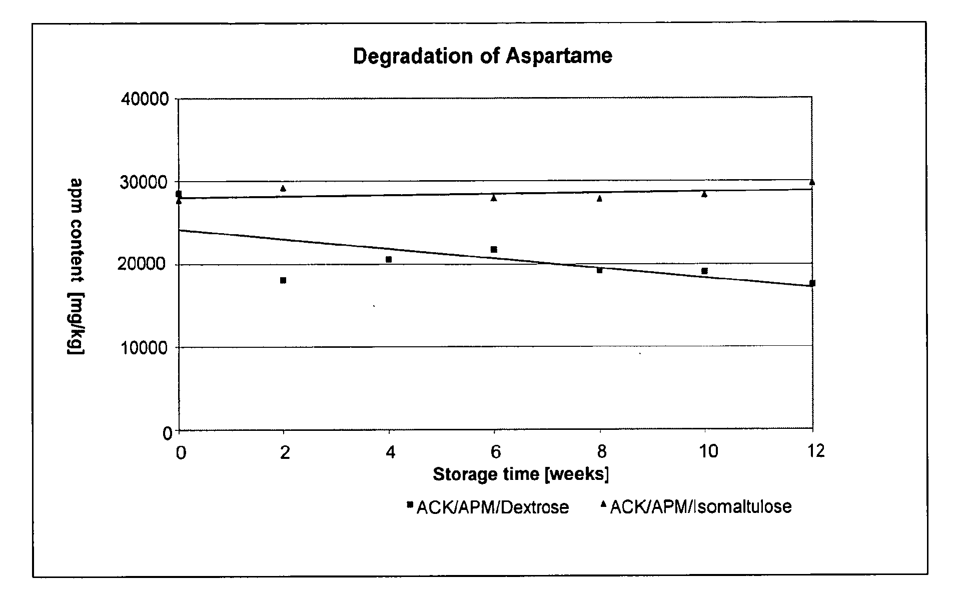

The discoloration is evident from Figures 1 and 2:

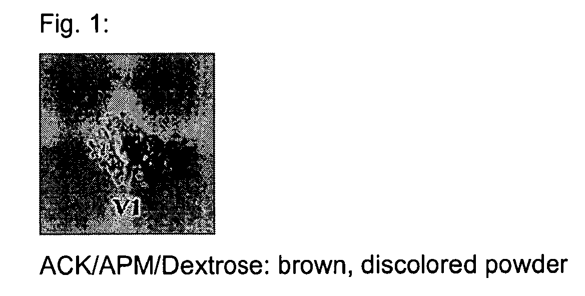

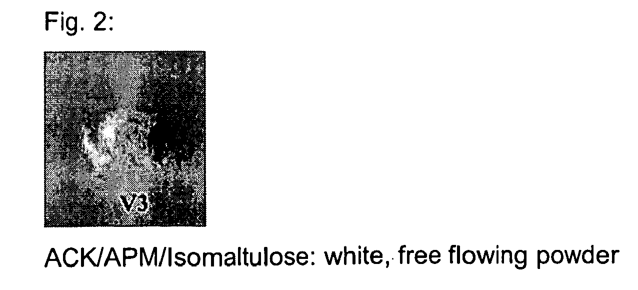

### 1.2 Dry compositions, extended storage

The compositions from example 1.1 were further stored up to 52 weeks. Storage conditions were the same as described above, samples were taken every four weeks for analysis of sweetener content via HPLC and optical evaluation.

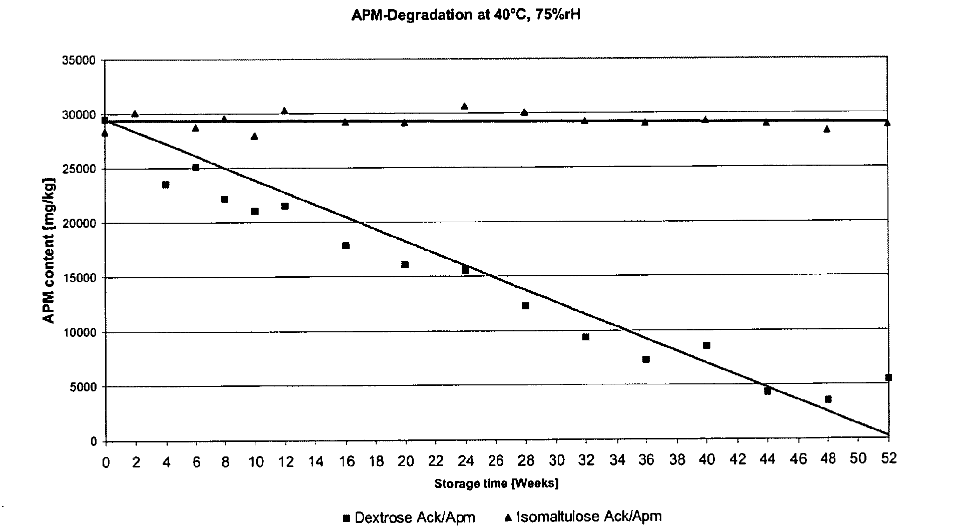

The results demonstrate that the degradation of aspartame due to Maillard reactions can be inhibited effectively using isomaltulose instead of dextrose as the bulk sweetener. This is especially surprising, as both carbohydrates are reducing sugars that tend to undergo Maillard-like reactions.

An optical evaluation confirms that browning of the isomaltulose containing system is minimal, even after 52 weeks of storage at 40°C and 75% relative humidity.

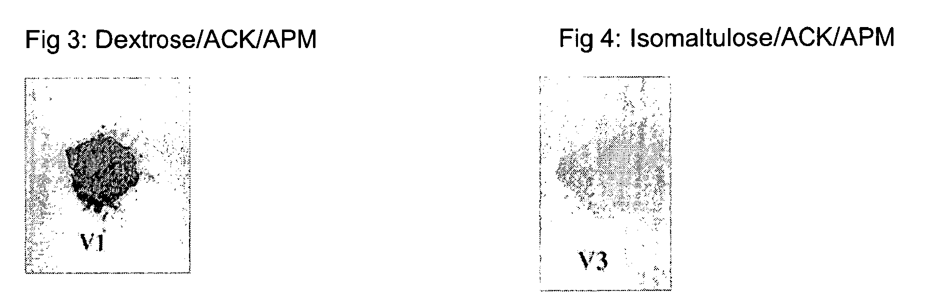

### 1.3 Dry compositions, storage of various HIS combinations at 50°C,

Using the procedure according to Example 1.1, the following powder mixtures were prepared:

| g/100g powder mixture | Dextrose/APM | Isomaltulose/APM | Dextrose/APM/Sac | Isomaltulose APM/Sac |
|---|---|---|---|---|
| Dextrose | 96.2 | 0 | 97.5 | 0 |
| Isomaltulose | 0 | 96.2 | 0 | 97.5 |
| Aspartame | 3.8 | 3.8 | 1.5 | 1.5 |
| Saccharine (Sac) | 0 | 0 | 1.0 | 1.0 |

These dry mixes were stored at 50 °C and 75% rH for a period of 24 weeks. Samples for analysis of sweeteners via HPLC were taken every two weeks. After 8 weeks of storage, sampling frequency was extended to four weeks. The graph below shows the results obtained for the degradation of aspartame:

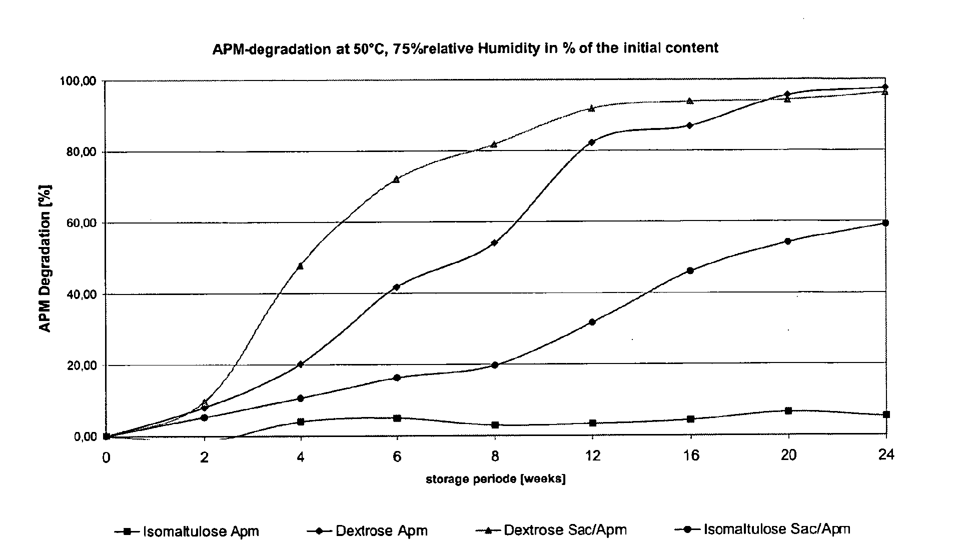

This example demonstrates that the described effect can be seen in various different combinations of high intensity sweeteners. Regardless whether aspartame is used alone or in combination with other high intensity sweeteners, the degradation of aspartame can be slowed down using isomaltulose instead of dextrose as the bulk sweetener. The extent of the effect might differ: Degradation is suppressed almost entirely when aspartame alone or a acesulfame K/aspartame combination are used (compare Example 1.1 or 1.2) or reduced by approximately 40% using a combination of saccharine and aspartame.

### 1.4 Dry compositions: comparison of different carbohydrate bulk sweeteners

With the procedure according to Example 1.3 the following powder mixtures were prepared and stored at 50 °C and 75% relative humidity for 34 weeks. In the beginning at the end of the storage period the remaining aspartame content was analyzed using HPLC:

| g/100g powder mixture | Dextrose APM/ACK | Saccharose APM/ACK | Isomaltulose APM/ACK |
|---|---|---|---|
| Dextrose | 97.0 | 0 | 0 |
| Isomaltulose | 0 | 0 | 97.0 |
| Saccharose | 0 | 97.0 | 0 |
| Aspartame | 2.0 | 2.0 | 2.0 |
| Acesulfame K | 1.0 | 1.0 | 1.0 |

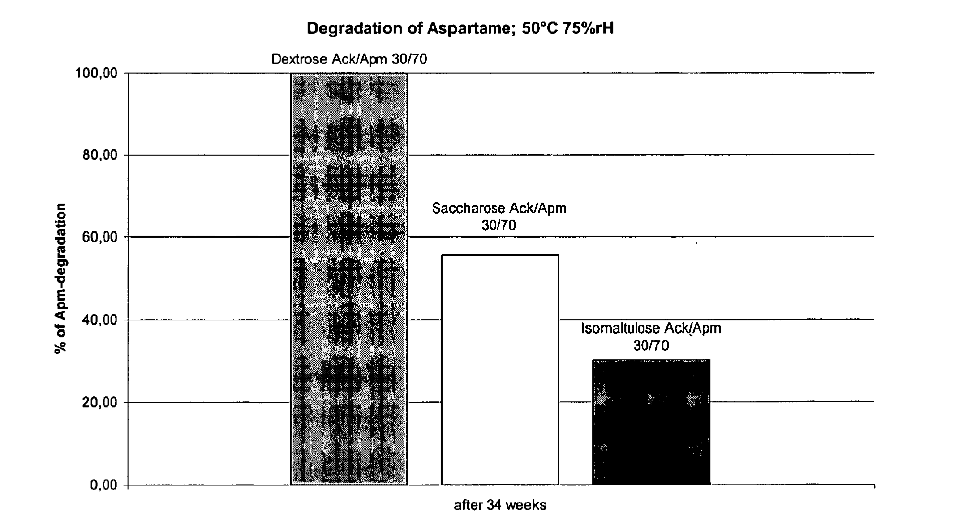

The results demonstrate, that the degradation rate of aspartame when blended with isomaltulose is lower than the degradation rate of a blend of aspartame with dextrose, but also significant lower compared to the rate of degradation of a blend of aspartame with saccharose as the bulk sweetener. This is especially surprising, as the two main factors influencing the kinetics of the Maillard reaction, namely reducing capacities of sugars and number of sugar units per molecule, cannot explain this behavior of aspartame, when blended with isomaltulose instead of other bulk sweeteners.

### 2. Liquid compositions/aqueous solution

A liquid composition was prepared consisting of:
A) water, citric acid, and
B) either isomaltulose or saccharose or high fructose corn syrup (HFCS) 55, and
C) either aspartame or aspartame and acesulfame K or cyclamate or mixtures thereof.

The compositions were adjusted to pH 2.5 using citric acid.

These solutions were heated to 90 °C, held at this temperature for 120 min and cooled down to room temperature. Samples for chemical analysis (HPLC) were taken at 60 and 120 min to evaluate possible degradation reactions. Visual appearance was checked after cooling of the solutions to room temperature.

### Example 2.1:

Solutions were prepared as follows:

| | Example 2.1.1 g/100 ml | Example 2.1.2 g/100 ml |
|---|---|---|
| Citric acid • H₂O | 0.25 | 0.25 |
| Isomaltulose | 5 | 0 |
| Aspartame | 0.03 | 0.06 |

After HPLC analysis, the following concentrations of aspartame were found (aspartame content in wt.-% based on initial content of the solution: 100):

| wt.-% aspartame | Example 2.1.1 | Example 2.1.2 |
|---|---|---|
| After 60 min at 90 °C | 83 | 79.6 |
| After 120 min at 90°C | 75 | 71 |

Surprisingly it was found that in the solution containing additional isomaltulose 5% less aspartame degraded than in the isomaltulose-free solution.

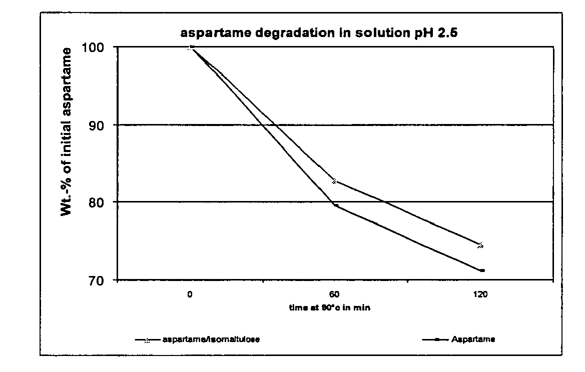

### Example 2.2:

Solutions were prepared according to the following table; the procedure was as described in Example 2.

| | Example 2.2.1 g/100 ml | Example 2.2.2 g/100 ml |
|---|---|---|
| Citric acid • H₂O | 0.25 | 0.25 |
| Isomaltulose | 2 | 0 |
| Sucrose | 0 | 2 |
| Aspartame | 0.008 | 0.008 |
| Acesulfame K | 0.008 | 0.008 |
| Cyclamate | 0.03 | 0.03 |

After HPLC analysis the following concentrations of aspartame were found: (aspartame content in wt.-% based on initial content of the solution: 100):

| wt.-% apartame | Example 2.2.1 | Example 2.2.2 |
|---|---|---|
| After 60 min at 90 °C | 83 | 82 |
| After 120 min at 90 °C | 75 | 71 |

Surprisingly it was found that in the isomaltulose-aspartame solution 5% less aspartame degraded than in the sucrose-aspartame solution.

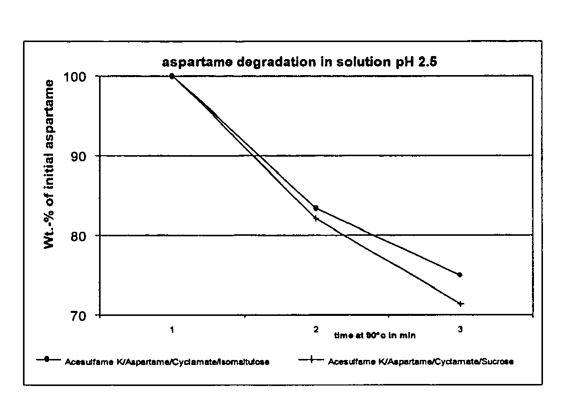

### Example 2.3:

Solutions were prepared according to the following table. The procedure was as described for Example 2. Visual inspection of the samples to estimate their degree of degradation was done after their cooling to room temperature.

| | Example 2.3.1 g/100 ml | Example 2.3.2 g/100 ml |
|---|---|---|
| Citric acid • H₂O | 0.25 | 0..25 |
| Isomaltulose | 5 | 0 |
| HFCS 55 (calculated on dry weight) | 0 | 5 |
| Aspartame | 0.03 | 0.03 |
| Visual appearance | clear solution without any color | clear, but yellow to slightly brown colored solution |

It was found, that there was no discoloration in a solution containing aspartame and isomaltulose, while the comparison containing aspartame and high fructose corn syrup showed significant yellow discoloration.

## Claims

1. A composition comprising
- as component I: Isomaltulose and
- as component II: Aspartame or a blend of high intensity sweeteners comprising aspartame and one or more high intensity sweetener other than aspartame.

2. The composition according to claim 1, wherein the high intensity sweetener other than aspartame is selected from the group consisting of acesulfame K, aspartame-acesulfame-salt, sucralose, saccharin, cyclamate, neotame, thaumatine, stevioside, and mixtures thereof.

3. The composition as claimed in claim 1 or 2, wherein the mixture comprises components I and II in a weight ratio of 5:1 to 50,000:1.

4. The composition as claimed in claim 3 wherein the mixture comprises components I and II in a weight ratio of 20:1 to 20,000:1.

5. A process for the manufacture of a composition according to claim 1, comprising the step of mixing isomaltulose with aspartame or a blend of high intensity sweeteners comprising aspartame and one or more high intensity sweetener other than aspartame.

6. The process according to claim 5, wherein one or more of isomaltulose and aspartame and high intensity sweetener other than aspartame is in the form of a powder.

7. The use of a composition as claimed in any one of claims 1 to 4 in edible compositions.

8. The use as claimed in claim 7, wherein the edible composition is a table top sweetener product, hypotonic beverage, soft drink, sports drink, hypertonic beverage, energy drink, isotonic beverage, confectionery, dairy product; pudding mix; dessert, cake mix, cereal, cereal bar, baked good; chewing gums, syrup or dilutable, pharmaceutical, delicacy, as ready to eat or instant product.

9. The use as claimed in claim 8 in the form of an instant product.

10. The use of isomaltulose for the stabilization of aspartame or aspartame containing compositions.

11. A method for reducing the browning of aspartame or an aspartame containing composition which method comprises adding to the aspartame or aspartame containing composition an effective amount of isomaltulose.
